# EUROPEAN PATENT SPECIFICATION

(11) **EP 1 591 492 B1**
(45) Date of publication and mention of the grant of the patent: **12.09.2007**
(21) Application number: 05008718.8
(22) Date of filing: 21.04.2005
(51) Int. Cl.: C09D 5/00, C09D 5/29, C09D 5/30, C09D 5/36, C09D 5/38, C09C 1/00, C09C 1/62, C09C 1/64

(54) **Process for multi-layer special effect coating**
Verfahren zur Herstellung eines Spezialeffekt-Mehrschichtueberzuges
Procédé pour la production des revêtements à effets spéciaux à multicouches

(30) Priority: 26.04.2004 US 831844
(43) Date of publication of application: 02.11.2005
(73) Proprietor: E.I. DU PONT DE NEMOURS AND COMPANY, Wilmington, DE 19898 (US)
(72) Inventor: Friese, Markus, 45968 Gladbeck (DE); Berschel , Guenter, 50735 Köln (DE); Duda, Andrew, 45968 Glöadbeck (DE)
(74) Representative: DuPont Performance Coatings Biering/Blum/Kimpel

(56) References cited:
- EP-A- 0 581 235
- EP-A- 1 013 723
- EP-A- 1 013 724
- DE-A1- 4 039 593
- DE-A1- 10 331 903
- US-A- 5 753 024
- US-A- 5 964 936
- PATENT ABSTRACTS OF JAPAN vol. 1998, no. 05, 30 April 1998 (1998-04-30) & JP 10 017674 A (TOYO INK MFG CO LTD), 20 January 1998 (1998-01-20)

## Description

### Background of the Invention

### 1. Field of the Invention

The invention relates to a process for providing a multi-layer special effect coating on substrates, in particular on vehicles, which process may be used in both original and repair coating applications for vehicles.

### 2. Description of Related Art

There is a constantly increasing demand for exclusive coatings, in particular, special effect coatings in the vehicle coating sector. On this basis, metal pigments in flake form, for example, conventional aluminum pigments and numerous further special effect pigments in flake form have therefore already been developed. This ever wider range of special effect pigments includes, for example, "pearlescent" pigments, LCP pigments (LCP = liquid crystal polymer) or OV pigments (OV = optically variable). Pearlescent type and other special effects can be achieved with these pigments, the resultant effects generally varying as a function of the angle of observation and/or angle of incidence. Examples of special effect pigments are disclosed in DE 10 331 903, EP 1 013 723, EP 1 013 724, US 5,964,936, DE 4 039 593, US 5,753,024, EP581235 and JP 10017674. Naturally, the more unusual the effects are, which can be achieved, the costlier the pigments used are and thus, also is the coating. Special, relatively elaborate application processes are moreover often required to ensure optimum development of the special effects.

It is known from the coating of relatively small objects, such as, for example, vehicle attachments, for example, radiator grilles, motorcycle parts or wheel rims, to provide surfaces with chrome-like coatings. However, the coatings and application processes used for this purpose are by no means directly usable for coating complete vehicle bodies. For example, a water-dilutable metallic base coat (Stollaquid G1152; DuPont Performance Coatings Austria GmbH) is commercially available for to be heated to 35-65°C before application. Such a procedure is impractical for coating whole vehicle bodies.

EP 990 682 furthermore describes a coating process with which it is possible to obtain surfaces with a metal-like effect. To this end, a primer, a first metallic base coat containing non-leafing aluminum pigments and a second metallic base coat containing thin metal flakes of a thickness of at most 0.08 µm are applied onto the substrate. However, especially in workshop use with manual application, for example, in a repair paint shop, the process presented in said document yields coatings of inadequate quality, possibly resulting in speckling, cracking, streaking and thus, an inadequate development of the special effect.

There is accordingly still a requirement for a multi-layer coating process with which exclusive special effect coatings with a very good, uniform development of the special effect may be provided in a manner which is not excessively complex.

### Summary of the Invention

The invention accordingly relates to a process for providing a multi-layer special effect coating on substrates, in particular on vehicles, comprising the following steps :
A) applying a colour-imparting solid-colour base coat layer of a conventional colour-imparting solid-colour base coat I containing conventional colour-imparting absorption pigments onto a substrate precoated with a filler and/or primer coating composition and optionally, further coating compositions,
B) applying a special effect base coat layer of a metallic base coat II, which contains aluminum pigments in flake form with an average particle thickness of 0.01 to 0.10 µm and an average particle size of 5-50 µm, in a film thickness of 2.8 µm onto the base coat layer applied in step A)
C) optionally, drying intermediately the coating so applied,
D) applying a clear coat layer of a transparent clear coat and
E) curing the thus obtained coating.

Using the process according to the invention, optically perfect special effect coatings with an imitation metal finish can be obtained; it being possible, depending on the clear coat used, to obtain matt finishes with an anodized aluminum effect, silk-gloss finishes with an aluminum effect and gloss finishes with a chrome-like effect.

### Detailed Description of the Embodiments

The individual steps of the method according to the invention are explained in greater detail below.

In step A), a conventional solid-colour base coat I containing colour-imparting absorption pigments is applied in a film thickness conventional for solid-colour base coats onto a substrate which has been precoated with a filler coating composition and/or primer coating composition and optionally, further coating compositions. The substrates preferably comprise vehicles, but it is in principle also possible to coat any other desired substrates of a similar dimension. Reference will, however, hereinafter primarily be made to vehicles as the substrates.

The vehicles are already precoated before application of the solid-colour base coat I. The prior coating comprises a coating of a filler coating composition, such as is conventionally used in vehicle coating. The filler coating compositions may also perform the function of a filler/primer or priming filler. The fillers contain the conventional constituents, such as, for example, binders, additives, fillers, organic solvents and/or water. For example, the fillers may contain binder systems based on physically drying binders, such as physically drying polyurethane and/or polyacrylate resins, and/or based on chemically crosslinking binder systems, such as epoxy resins and polyamine curing agents or hydroxy-functional resins and polyisocyanate crosslinking agents. The fillers used may be solvent-based or water-based.

The filler coating composition is preferably sanded before the solid-colour base coat I is applied.

The solid-colour base coat I to be applied in step A) comprises a solid-colour base coat as is conventionally used in vehicle coating. The solid-colour base coat contains conventional colour-imparting absorption pigments, such as are used in solid-colour base coats in vehicle coating. Suitable colour-imparting absorption pigments are any conventional coating pigments of an organic or inorganic nature. Examples of inorganic or organic colour-imparting pigments are titanium dioxide, iron oxide pigments, carbon black, azo pigments, phthalocyanine pigments, quinacridone, perylene or pyrrolopyrrole pigments. Preferably, however, light absorption pigments are used (e.g. white, light beige or light grey pigments).

The solid-colour base coat I contains no special effect-imparting pigments, such as, for example, special effect-imparting metal pigments.

The solid-colour base coat I applied in step A) furthermore contains conventional binders, organic solvents and/or water and optionally, conventional coating additives. Usable binders are, for example, those based on water-dilutable or solvent-dilutable polyurethane, acrylated polyurethane, polyacrylate, polyester, acrylated polyester and/or alkyd resins. The binder systems may be physically drying and/or chemically crosslinking by means of addition polymerisation, polycondensation and/or polyaddition reactions. Chemically crosslinkable binder systems contain appropriate crosslinkable functional groups. Suitable functional groups are, for example, hydroxyl groups, isocyanate groups, acetoacetyl groups, unsaturated groups, for example, (meth)acryloyl groups, epoxy groups and amino groups. Crosslinking agents with appropriate, complementarily reactive functional groups may be present for the purpose of crosslinking. Among the chemically crosslinkable binder systems, it is hydroxyl group-containing binders and polyisocyanate crosslinking agents which are preferred. The base coats may contain further resins, for example, cellulose esters and/or melamine resins.

The binder systems listed above are stated merely by way of example. The binder may also be further modified and be combined with one another at will. No particular restrictions apply to the binders which may be used. Any binders known to the person skilled in the art and in particular conventional in the vehicle coating sector for formulating colourand/or special effect-imparting coating compositions may be used.

Preferably the solid-colour base coat I comprises hydroxyl-functional binders and polyisocyanate crosslinking agents with free isocyanate groups.

The organic solvents comprise conventional coating solvents. These may originate from the preparation of the binders or may be added separately. Examples of suitable solvents are mono- or polyhydric alcohols, for example, propanol, butanol, hexanol; glycol ethers or esters, for example, diethylene glycol dialkyl ethers, dipropylene glycol dialkyl ethers; in each case with C1 to C6 alkyl, ethoxypropanol, ethylene glycol monobutyl ether; glycols, for example, ethylene glycol, propylene glycol, N-methylpyrrolidone as well as ketones, for example, methyl ethyl ketone, acetone, cyclohexanone; aromatic or aliphatic hydrocarbons, for example toluene, xylene or linear or branched aliphatic C6-C12 hydrocarbons.

Examples of conventional coating additives which may be used include levelling agents, rheological agents, such as highly disperse silica or polymeric urea compounds, thickeners, such as polyacrylate thickeners containing carboxyl groups or associative thickeners for example based on polyurethanes, microgels, defoamers, wetting agents, anticratering agents, adhesion promoters and curing accelerators. The additives are used in conventional amounts known to the person skilled in the art.

The solid-colour base coat I exhibits, for example, a solids content of 15-30 wt.%.

The solid-colour base coat I is applied in film thicknesses conventional for vehicle coating. Conventional film thicknesses for solid-colour base coatings in vehicle coating are, for example, 10-45 µm, preferably 20-30 µm (c.f. also Fritz Sadowski "Basiswissen der Autoreparaturlackierung" ["Basics of automotive repair coating"], page 222]. The film thicknesses stated here and throughout the present document are always dry film thicknesses. After application, the solid-colour base coat I may be subjected to a flash-off phase, for example, at room temperature. The following application may be performed wet-on-wet or also after curing of the solid-colour base coat layer at conventional temperatures for example 40-80°C. Preferably the following application is performed wet-on-wet, i.e. base coat II is applied on base coat layer I without curing base coat I. Preferably base coat II is applied after a flash-off phase of for example up to 20-30 minutes on base coat layer I.

In step B), a metallic base coat II, containing aluminium pigments in flake form of an average particle thickness of 0.01 to 0.10 µm, preferably 0.015 to 0.04 µm and an average particle size of approx. (approximately) 5-50 µm preferably of 8-20 µm, is applied. Basis for the particle size is the D50-value. The aluminum pigments of the metallic base coat II applied in step B) are so-called VMF pigments (VMF = Vacuum Metallized Flakes) or PVD pigments (PVD = Physical Vapor Deposition) and are extremely thin. The particle size of the aluminum pigments used here is comparable with the particle size of conventional aluminum pigments used in metallic base coats, but the flake thickness is many times lower than that of conventional aluminum pigments used in metallic base coats. VMF/PVD pigments can be manufactured as follows: High purity aluminum metal is vapor deposited, in a vacuum chamber, onto a flexible web that is surface treated with a release coating. The metal is deposited in a very thin layer and subsequently removed by solubilizing the release coating in a solvent bath. The metal is then metal is then converted into appropriate sized flakes. Such aluminum pigments are commercially available as pigment preparations for example under the names Hydroshine^{®} (Edkart), Metalure^{®} (Eckart), Metasheen^{®} Such aluminum pigments are commercially available as pigment preparations for example under the names Hydroshine^{®} (Eckart), Metalure^{®} (Eckart), Metasheen^{®} (Wolstenholme/Krahn), Decomet^{®} (Schlenk) and Starbrite^{®} (Silberline) with an aluminum content of e.g. 10 %.

The metallic base coat II applied in step B) preferably contains no further special effect pigments in addition to the above mentioned aluminum pigments. It may, however, also contain conventional colour-imparting absorption pigments of the type already stated above.

The metallic base coat II furthermore contains conventional binders, organic solvents and/or water and optionally conventional coating additives. Usable binders, conventional coating additives and organic solvents are, for example, those as have already been stated above in the description of the single tone base coat I applied in step A). Metallic base coat II may be solvent- or water-based and has, for example, a solids content of approx. 3-13 wt.%, preferably 5-10 wt.% and accordingly has a substantially lower solids content than base coat I.

Metallic base coat II is applied in a film thickness which is distinctly less than the film thickness for metallic base coats which is conventional in vehicle coating of approx. 10-45 µm, preferably, 12-25 µm. Metallic base coat II is applied in film thicknesses of approx. 2-8 µm, preferably of 2-6 µm.

Metallic base coat II is preferably applied in two or more spray passes. In order to ensure the formation a particularly good, uniform special effect without speckling and streaking, application particularly advantageously proceeds in at least 3, preferably 3 to 4, particularly preferably in 4 "half" spray passes. The peculiarity of a half spray pass in comparison with a normal full spray pass is that a uniformly continuous coating film is not formed on the substrate surface by the coating applied in an individual half spray pass, when considered by itself. Effectively, an incompletely and non-uniformly covering coating layer is applied with a an individual half spray pass, when considered by itself. Effectively, an incompletely and non-uniformly covering coating layer is applied with a half spray pass. Only by virtue of the coating layers applied in two or more half spray passes is a covering coating layer obtained with a uniformly continuous coating surface. A half spray pass is also described in coating terminology as a thin, open spray pass or as a tack coat. A half spray pass is, however, not an overspraying spray pass. The coatings specialist is familiar with the expressions "normal full" spray pass and "half" spray pass and their equivalents and is straightforwardly able to put these conceptual definitions into practice.

A normal full spray pass is generally performed in such a manner that uniform coating strips are applied on the surface to be coated, i.e. the coating material is applied in uniform parallel strips with the spray gun until the entire surface is coated, with the spray gun being passed evenly over the spray surface at an angle of approximately 90°. A coating strip applied with a single spray stroke has a film thickness gradient over the width of the coating strip such that a decrease in film thickness to as little as 0 µm towards the edges of the coating strip is obtained and a layer thickness maximum is present in the central zone of the coating strip which approximately corresponds to the desired layer thickness to be applied. In order to produce a uniformly continuous coating film on the substrate to be coated with one spray pass, each coating strip applied within one spray pass should therefore conventionally overlap by about half with the coating strip applied in the preceding spray pass (c.f., for example, "Das Fachwissen für den Maler und Lackierer" ["Specialist knowledge for painters and coaters"], Stam-Verlag Cologne, Munich, 2nd edition 1989, p. 169, 170).

However, at variance with the above, each spray pass is performed according to the invention in such a manner that uniform, adjacent and substantially non-overlapping coating strips are applied onto the substrate surface to be coated with two or more spray strokes.

In other words, adjacent non-overlapping or only slightly overlapping coating strips are applied in two or more approximately parallel spray strokes. In this manner, an incompletely and non-uniformly covering coating film with a non-uniformly continuous surface is produced. The next spray pass in each case is then advantageously applied in such a manner as to be at least partially offset in relation to the preceding spray pass, i.e. the coating strips of each subsequent spray pass are applied in such a manner that they lie with the maxima of their film thickness substantially over the zone of the coating strips applied with the preceding spray pass in which two coating strips are adjacent to one another. This procedure ultimately gives rise to a uniformly continuous coating film surface.

A brief interim flash-off phase may be allowed between each spray pass.

Base coats I coats I and II may be applied with conventional application equipment, i.e. for example, with spray guns conventionally used in vehicle repair coating together with corresponding nozzle and air cap fittings.

Step C) may then involve intermediate drying of the complete applied base coat layer, for example, within 10-30 minutes at, for example, 40-80°C, preferably, 50-70°C. Intermediate drying may also proceed over a longer period at room temperature.

After the optionally performed intermediate drying, step D) involves applying a coating layer of a conventional commercial clear coat on the base coat I and II which have been applied.

Suitable clear coats are in principle any known un-pigmented or transparently pigmented coating compositions as are, for example, conventional in vehicle coating. These may comprise solvent- or water-based clear coats. In particular, they comprise two-component clear coats based on chemically crosslinking binders, for example, based on hydroxy-functional binder components and polyisocyanate crosslinking agents. The clear coat may furthermore contain conventional coating additives and organic solvents and/or water. Depending on the composition of the clear coat, it is possible, as already mentioned above, to obtain matt, silk-gloss or chrome-like surfaces. In order to obtain matt surfaces (anodised aluminum effect) or silk-gloss surfaces (aluminum effect), the clear coat may contain matting agents. The matting agents may be inorganic or organic in nature. Examples of inorganic matting agents are amorphous or pyrogenic silica, silica gels and phyllosilicates, for example, hydrated magnesium silicate (talcum). The inorganic matting agents may be present in untreated form or in a form surface-treated with organic compounds, for example, with suitable grades of wax, or also with inorganic compounds. Examples of organic matting agents are Al, Zn, Ca or Mg stearate, waxy compounds, such as, for example, micronised polypropylene waxes, together with urea/formaldehyde condensation products. Matting agents are commercially obtainable products and are known to the person skilled in the art. The quantity of matting agent is determined by the desired effect to be achieved. Depending on the quantity of matting agent used, it is, for example, possible to obtain surfaces with a graduated degree of gloss.

In step E), the clear coat layer is cured, optionally together with the applied metallic base coat layers. Curing may proceed at room temperature over several hours or, after a flash-off phase of, for example, 10-25 minutes at room temperature, be forced at higher temperatures up to, for example, 80°C, preferably, at 40 to 60°C, for example, within 30-80 minutes. Curing may, however, also be performed at temperatures of above 80°C, for example, at 110-140°C.

Using the process according to the invention, it is possible to obtain coatings with imitation metal effects, for example, with an anodised aluminum, aluminum or chrome-like effect, which also fulfil customer demand, especially in the vehicle sector, for exclusive coatings which differ from the conventional design. The process is relatively simple to perform and, for example, does not require heating of the entire substrate prior to application of the special effect base coats, as is known from the prior art for the production of similar special effect coatings. The process according to the invention may be used to produce exclusive coatings in industrial vehicle original coating, but particularly advantageously in workshop applications, for example in the context of vehicle coating in a paint shop for coating a complete vehicle or for providing a repair coating. It is particularly advantageous that surfaces with a very good, uniform development of the special effect may be obtained even in the case of spraying by means of a manual spray gun. The surfaces exhibit neither cracking nor speckling or streaking. Moreover, in order to achieve the described special effects, it is not necessary to apply a further metallic base coat containing costly special effect pigments under the metallic base coat II.

Depending on requirements and customer desires, it is of course also possible to coat only individual parts of a vehicle body in this manner. The process according to the invention may also be used for coating buses, commercial vehicles and other industrial products.

The coatings obtained by the process according to the invention meet the quality standards of the automotive industry with regard to their technical properties.

The following Examples are intended to illustrate the invention in greater detail.

### EXAMPLE

A car body was coated according to the invention. To this end, the body with an electrodeposited primer coat was coated with a conventional commercial solvent-based two-component filler (Standox^{®} two-pack nonstop filler/primer, Standox^{®} two-pack hardener) to a dry film thickness of approx. 60 µm, the coating was cured for 30 minutes at 60°C and then carefully sanded. A conventional commercial solvent-based solid-colour base coat containing conventional colour-imparting absorption pigments (Standox base coat RAL 7035 + Standox two-pack MS hardener15-30 + Standox thinner MSB 15-25) was then applied onto the filler coat obtained in the above manner to a total dry film thickness of approx. 13 µm by means of a spray gun in 2 spray passes.

After flashing-off for approx. 30 minutes at room temperature, the resultant base coat layer was then coated by means of a spray gun in four half spray passes with a water-based metallic base coat which contained as very fine aluminum bronze (Stollaquid Dekorsilber G1152 from DuPont Performance Coatings Austria GmbH with Hydroshine WS 1001 aluminum preparation from Eckart (20% in ethylene glycol monobutyl ether)) to a resultant dry film thickness of approx. 2-3 µm. After a drying phase of approx. 15 minutes at 60°C, overcoating was performed with a matted, two-pack solvent-based clear coat (Standox Standocryl^{®} two-pack Supermatt clear coat + 10% Standox elastic additive + Standox^{®} two-pack MS hardener 25-40 + 10% Standox two-pack thinner 20-25) to a resultant dry film thickness of 55 µm. After flashing-off for 20 minutes, the coating film was cured for 45 minutes at 60°C.

The resultant coating exhibited an optically perfect surface with a uniformly developed aluminum effect.

The coating according to the invention obtained above was compared with a coating of a conventional commercial base coat applied in conventional manner. To this end, a metal sheet coated with an electrodeposited primer was coated with a filler as described above and cured. A conventional commercial solvent-based metallic base coat containing conventional aluminum pigments (Standox base coat mix 594 with Metalux R475 aluminum preparation from Eckart + Standox two-pack MS hardener 15-30 + Standox thinner MSB 15-25) was then applied onto the filler coat obtained in the above manner to a total dry film thickness of approx. 13 µm by means of a spray gun in 2 spray passes. After flashing-off for approx. 30 minutes at room temperature, overcoating was performed as described above with a matted, two-pack solvent-based clear coat (Standox Standocryl^{®} two-pack Supermatt clear coat + 10% Standox elastic additive + Standox^{®} two-pack MS hardener 25-40 + 10% Standox two-pack thinner 20-25) to a resultant dry film thickness of 55 µm and, after flashing-off for 20 minutes, the coating was cured for 45 minutes at 60°C.

The coating obtained according to the invention (1) and the comparison coating (2) were subjected to the moist heat test (72 h and 240 h; DIN 50017) and the VDA stone impact test (2 bar; 1 kg steel shot; DIN 50014, DIN 50982). The following Table summarizes the test results.
VDA = Verband der Automobilindustrie e.V. [German automotive industry association]
GT = crosshatching index

| Test method: | Coating according to the invention (1) | Comparison coating (2) |
|---|---|---|
| Moist heat test, 72 h 1 h after test | GT 2.0 | GT 4.0 |
| Moist heat test, 72 h 24 h after test. | GT 2.0 | GT 4.0 |
| Creepage * | 0.7 mm | 1.1 mm |
| Moist heat test, 240 h 1 h after test. | GT 2.0 | GT 2.0 |
| Moist heat test, 240 h 24 h after test. | GT 2.0 | GT 2.0 |
| Creepage* | 0.4 mm | 0.2 mm |
| VDA stone impact test | 2.5 | 2.5 |

| | | |
|---|---|---|
| *Creepage at score after moist heat test | | |

The special effect coating according to the invention clearly exhibits a similarly good level of quality with regard to adhesion and the stone impact test as a conventional base coat coating produced from a conventional metallic base coat.

## Claims

1. A process for multi-layer special effect coating of substrates comprising the following steps:
A) applying a colour-imparting solid-colour base coat layer of a conventional colour-imparting solid-colour base coat I containing conventional colour-imparting absorption pigments onto a substrate precoated with a filler and/or primer coating composition and optionally further coating compositions,
B) applying a special effect base coat layer of a metallic base coat II, which contains aluminium pigments in flake form with an average particle thickness of 0.01 to 0.10 µm and an average particle size of 5-50 µm, in a film thickness of 2-8 µm onto the base coat layer applied in step A),
C) optionally intermediately drying the coating so applied,
D) applying a clear coat layer of a transparent clear coat and
E) curing the thus obtained coating.

2. A process according to claim 1, wherein the solid-colour base coat I is applied in a film thickness of 10-45 µm.

3. A process according to claim 2, wherein the solid-colour base coat I is applied in a film thickness of 20-30 µm.

4. A process according to claim 1, wherein the solid-colour base coat I contains light absorption pigments.

5. A process according to claim 1, wherein the metallic base coat II contains aluminium pigments in flake form of an average particle thickness of 0.015 to 0.04 µm.

6. A process according to claim 1, wherein the metallic base coat II has a solids content of 3-13 wt.%.

7. A process according to claim 1, wherein the conventional colourimparting solid-colour base coat I comprises a cross-linking agent.

8. A process according to claim 1, wherein the metallic base coat II is applied in at least 3 successive half spray passes.

9. A process according to claim 1, wherein the metallic base coat II is applied in at least 3 spray passes, wherein each spray pass is performed in such a manner that uniform, adjacent and substantially non-overlapping coating strips are applied onto the substrate surface to be coated with two or more spray strokes.

10. A process according to claim 1, wherein the intermediate drying C) proceeds at 40-80°C.

11. A process according to claim 1, wherein the substrates comprise vehicles or vehicle parts.

## Patentansprüche

1. Verfahren für das mehrschichtige Spezialeffektbeschichten von Substraten, umfassend die folgenden Schritte:
A) das Aufbringen einer Schicht farbverleihender Grundbeschichtung einheitlicher Farbe einer herkömmlichen farbverleihenden Grundbeschichtung einheitlicher Farbe I, die herkömmliche farbverleihende Absorptionspigmente enthält, auf ein Substrat, das mit einem Füllstoff und/oder einer Grundiermittelbeschichtungszusammensetzung und wahlweise weiteren Beschichtungszusammensetzungen vorbeschichtet ist,
B) das Aufbringen einer Spezieleffekt-Grundbeschichtungsschicht aus einer metallischen Grundbeschichtung II, die Aluminiumpigmente in Flockenform mit einer durchschnittlichen Teilchendicke von 0,01 bis 0,10 µm und einer durchschnittlichen Teilchengröße von 5 - 50 µm enthält, in einer Filmdicke von 2 - 8 µm auf die in Schritt A) aufgebrachte Grundbeschichtungsschicht,
C) das wahlweise sofortige Trocknen der so aufgebrachten Beschichtung,
D) das Aufbringen einer klaren Beschichtungsschicht aus einer transparenten klaren Beschichtung und
E) das Aushärten der so erhaltenen Beschichtung.

2. Verfahren nach Anspruch 1, wobei die Grundbeschichtung I einheitlicher Farbe in einer Filmdicke von 10 - 45 µm aufgebracht wird.

3. Verfahren nach Anspruch 2, wobei die Grundbeschichtung I einheitlicher Farbe in einer Filmdicke von 20 - 30 µm aufgebracht wird.

4. Verfahren nach Anspruch 1, wobei die Grundbeschichtung I einheitlicher Farbe Lichtabsorptionspigmente enthält.

5. Verfahren nach Anspruch 1, wobei die metallische Grundbeschichtung II Aluminiumpigmente in Flockenform einer durchschnittlichen Teilchendicke von 0,015 bis 0,04 µm enthält.

6. Verfahren nach Anspruch 1, wobei die metallische Grundbeschichtung II einen Feststoffgehalt von 3 - 13 Gew.-% aufweist.

7. Verfahren nach Anspruch 1, wobei die herkömmliche farbverleihende Grundbeschichtung I einheitlicher Farbe ein Vernetzungsmittel umfasst.

8. Verfahren nach Anspruch 1, wobei die metallische Grundbeschichtung II in mindestens 3 aufeinanderfolgenden Halbsprühdurchgängen aufgebracht wird.

9. Verfahren nach Anspruch 1, wobei die metallische Grundbeschichtung II in mindestens 3 Sprühdurchgängen aufgebracht wird, wobei jeder Sprühdurchgang derart durchgeführt wird, dass gleichförmige, nebeneinanderliegende und sich im Wesentlichen nicht überlappende Beschichtungsstreifen auf die Substratoberfläche aufgebracht werden, die mit zwei oder mehreren Sprühstrichen beschichtet werden soll.

10. Verfahren nach Anspruch 1, wobei die Zwischentrocknung C) bei 40 - 80 °C erfolgt.

11. Verfahren nach Anspruch 1, wobei die Substrate Fahrzeuge oder Fahrzeugteile umfassen.

## Revendications

1. Procédé de revêtement multicouche à effet spécial de substrats comprenant les étapes suivantes :
A) l'application d'une couche de fond en aplat conférant de la couleur d'une couche de fond en aplat conférant de la couleur classique 1 contenant des pigments classiques d'absorption conférant de la couleur sur un substrat prérevêtu d'une charge et/ou d'une composition de revêtement primaire et éventuellement de compositions supplémentaires de revêtement,
B) l'application d'une couche de fond à effet spécial d'une couche de fond métallique II, qui contient des pigments d'aluminium sous la forme de flocons avec une épaisseur moyenne de particule de 0,01 à 0,10 µm et une taille moyenne de particule de 5 à 50 µm, une épaisseur de film de 2 à 8 µm sur la couche de fond appliquée dans l'étape A),
C) éventuellement, le séchage intermédiaire du revêtement ainsi appliqué,
D) l'application d'une couche transparente d'un enduit lustré transparent et
E) le durcissement du revêtement ainsi obtenu.

2. Procédé selon la revendication 1, dans lequel la couche de fond en aplat I est appliquée en une épaisseur de film de 10 à 45 µm.

3. Procédé selon la revendication 2, dans lequel la couche de fond en aplat I est appliquée en une épaisseur de film de 20 à 30 µm.

4. Procédé selon la revendication 1, dans lequel la couche de fond en aplat I contient des pigments d'absorption de la lumière.

5. Procédé selon la revendication 1, dans lequel la couche de fond métallique II contient des pigments d'aluminium sous la forme de flocons d'une épaisseur moyenne de particule de 0,015 à 0,04 µm.

6. Procédé selon la revendication 1, dans lequel la couche de fond métallique II a une teneur en matières solides de 3 à 13 % en pds.

7. Procédé selon la revendication 1, dans lequel la couche de fond en aplat conférant la couleur classique I comprend un agent de réticulation.

8. Procédé selon la revendication 1, dans lequel la couche de fond métallique II est appliquée en au moins 3 passages successifs de semi-pulvérisation.

9. Procédé selon la revendication 1, dans lequel la couche de fond métallique II est appliquée en au moins 3 passages de pulvérisation, dans lequel chaque passage de pulvérisation est effectué d'une manière telle que des bandes de revêtement uniformes, adjacentes et substantiellement non chevauchantes sont appliquées sur la surface du substrat à revêtir avec deux coups de pulvérisation ou plus.

10. Procédé selon la revendication 1, dans lequel le séchage intermédiaire C) se déroule à 40 à 80°C.

11. Procédé selon la revendication 1, dans lequel les substrats comprennent des automobiles ou des pièces automobiles.
